# EUROPEAN PATENT APPLICATION

(11) **EP 3 623 289 A1**
(43) Date of publication of application: **18.03.2020**
(21) Application number: 19163555.6
(22) Date of filing: 18.03.2019
(51) Int. Cl.: B64C 29/00, B64C 27/26, B64C 27/28

(54) **TILTROTOR FREE-PIVOT WING EXTENSION**

(30) Priority: 14.09.2018 US 201816131622
(71) Applicant: Bell Helicopter Textron Inc., Fort Worth, TX 76101 (US)
(72) Inventor: HEERINGA, Tjepke, Fort Worth, TX Texas 76101 (US)
(74) Representative: Barker Brettell LLP

(57) **Abstract**

Embodiments are directed to adding wing extensions (112; 301; 401) outboard of the engine nacelles (106; 305; 404) on tiltrotor aircraft (101; 402) to increase cruise efficiency. By using pivoting wing extensions (112; 301; 401), the download penalty during hover operations is decreased because the wing extensions (112; 301; 401) will pivot into the downwash rather than act as a barrier. Freely pivoting wing extensions (112; 301; 401) will align with the local airflow during conversion mode flight, which eliminates flow separation issues. The freely pivoting wing extensions (112; 301; 401) also reduce gust response by rotating out of the way of turbulence and updrafts. A trailing edge trim flap (115; 409) provides simple and effective control of the incidence angle for the free-pivot wing extension (112; 301; 401).

## Description

### BACKGROUND

An aircraft wing generates both lift and drag. Drag includes both parasitic drag and lift-induced drag. Induced drag decreases as speed increases and has its origin in wing tip vortices. Such vortices increase the velocity of the downwash off the wing and changes the effective angle of attack. This in turn changes the direction of the aerodynamic force, creating a force opposing to the direction of flight, which acts as drag. If the wingtip vortices are less efficient, then induced drag can be reduced. This can be accomplished by using longer wings so that downwash from the vortices affects only a part of the wing. The lift/drag ratio is proportional to the wing aspect ratio (i.e. the ratio of the wings length to its chord). Accordingly, longer wings are preferred to minimize energy lost in fighting drag.

Fixed-wing aircraft, such as airplanes, are capable of flight using wings that generate lift in response to the forward airspeed of the aircraft, which is generated by thrust from one or more turbine engines or propellers. Airplane wings generally have an airfoil cross section that deflects air downward as the aircraft moves forward, thereby generating a lifting force to support the aircraft in flight. Rotorcraft, such as helicopters, are capable of taking off, hovering, and landing vertically using thrust generated by one or more rotor systems and without the need for lift generated by wings. The helicopter rotor system also enables forward, backward, and lateral flight. Helicopters typically lack the forward airspeed of fixed-wing aircraft due to, for example, the phenomena of retreating blade stall and advancing blade compression.

Tiltrotor aircraft incorporate the vertical flight capabilities of rotorcraft while overcoming the speed limitations of rotorcraft by using proprotors that can change their orientation between vertical and horizontal positions. Tiltrotor aircraft typically have a pair of nacelles mounted near the outboard ends of a fixed wing, wherein each nacelle houses a propulsion system that provides torque and rotational energy to a proprotor. The nacelles are rotatable relative to the fixed wing such that the proprotors have a generally horizontal plane of rotation providing vertical thrust for takeoff, hovering and landing, much like a conventional helicopter, and a generally vertical plane of rotation providing forward thrust for cruising in forward flight with the fixed wing providing lift, much like a conventional propeller driven airplane. It has been found, however, that the outboard location of the nacelles coupled with the requirement of rotating the nacelles significantly influences the size and weight of the wing structure that is required to support the nacelles, which in turn limits the aspect ratio of the tiltrotor wing.

### SUMMARY

Embodiments are directed to adding wing extensions outboard of the engine nacelles on tiltrotor aircraft to increase cruise efficiency. By using pivoting wing extensions, the download penalty during hover operations is decreased because the wing extensions will pivot into the downwash rather than act as a barrier. Freely pivoting wing extensions will align with the local airflow during conversion mode flight, which eliminates flow separation issues. The freely pivoting wing extensions also reduce gust response by rotating out of the way of turbulence and updrafts. A trailing edge trim flap provides simple and effective control of the incidence angle for the free-pivot wing extension.

In an example embodiment, a tiltrotor aircraft comprises a fuselage, a first wing member having a first end and a second end, wherein the first end attached to the fuselage, an engine nacelle attached to the second end of the wing member, and a freely pivoting wing extension attached to the engine nacelle. The tiltrotor aircraft may further comprise a spindle attached to the engine nacelle, wherein the freely pivoting wing extension is attached to the engine nacelle by the spindle. The freely pivoting wing extension may be configured to rotate around the spindle in response to aerodynamic forces. The tiltrotor aircraft may further comprise one or more dampers mounted on the engine nacelle and configured to limit rotation of the freely pivoting wing extension. The first wing member may be a fixed wing that does not rotate relative to the fuselage. The freely pivoting wing extension may rotate around a spanwise axis of the first wing member. The freely pivoting wing extension may operate independently of the first wing member and may be attached to the engine nacelle on a side opposite to the first wing member. The tiltrotor aircraft may further comprise a trim flap attached to a trailing edge of the freely pivoting wing extension, wherein the trim flap is set at a fixed position or wherein a position of the trim flap relative to the freely pivoting wing extension is adjustable in-flight.

The tiltrotor aircraft may further comprise a power train coupled to the engine nacelle and comprising a power source and a drive shaft in mechanical communication with the power source, and a rotor system in mechanical communication with the drive shaft, at least part of the rotor system being tiltable between a helicopter mode position and an airplane mode position. The engine nacelle may be configured to move between a horizontal position and a vertical position during operation, wherein the freely pivoting wing extension operates independently of the position of the engine nacelle. The freely pivoting wing extension is configured to provide a lift force to the tiltrotor aircraft when the tiltrotor aircraft moves in a horizontal direction. The tiltrotor aircraft may further comprise a second wing member having a first end attached to a side of the fuselage opposite from the first wing member, a second engine nacelle attached to second end of the second wing member, and a second freely pivoting wing extension attached to the second engine nacelle.

In another embodiment, an apparatus comprises a propulsion system configured to move between a horizontal position and a vertical position during operation, and a free-wing assembly attached on the propulsion system. The apparatus may further comprise a spindle mounted on the propulsion system, wherein the free-wing assembly is attached to the propulsion system by the spindle. The free-wing assembly may be configured to rotate around the spindle in response to aerodynamic forces independently of the position of the propulsion system. The apparatus may further comprise one or more stops configured to limit range of motion of the free-wing assembly. The apparatus may further comprise a trim tab attached to a trailing edge of the free-wing assembly, wherein the trim tab is set at a fixed position or wherein a position of the trip tab relative to the free-wing assembly is adjustable during operation. The propulsion system may be attached to a fixed wing of a tiltrotor aircraft, wherein the free-wing assembly is configured to provide a lift force to the tiltrotor aircraft when the tiltrotor aircraft moves in a horizontal direction.

### BRIEF DESCRIPTION OF THE DRAWINGS

Having thus described the invention in general terms, reference will now be made to the accompanying drawings, which are not necessarily drawn to scale, and wherein:
**FIG. 1** illustrates a tiltrotor aircraft in a helicopter mode wherein the proprotors are positioned substantially vertical for use with certain embodiments.
**FIG. 2** illustrates the tiltrotor aircraft of FIG. 1 in an airplane mode wherein the proprotors are positioned substantially horizontal to provide a thrust for forward movement.
**FIGS. 3A-B** illustrate a top view of a free-pivot wing extension.
**FIGS. 4A-C** are side views of a free-pivot wing extension that illustrate movement of the free-pivot wing extension as a tiltrotor aircraft transitions from helicopter mode to airplane mode.

While the system of the present application is susceptible to various modifications and alternative forms, specific embodiments thereof have been shown by way of example in the drawings and are herein described in detail. It should be understood, however, that the description herein of specific embodiments is not intended to limit the system to the particular forms disclosed, but on the contrary, the intention is to cover all modifications, equivalents, and alternatives falling within the spirit and scope of the present application as defined by the appended claims.

### DETAILED DESCRIPTION

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms to describe a spatial relationship between various components or to describe the spatial orientation of aspects of such components should be understood to describe a relative relationship between the components or a spatial orientation of aspects of such components, respectively, as the device described herein may be oriented in any desired direction.

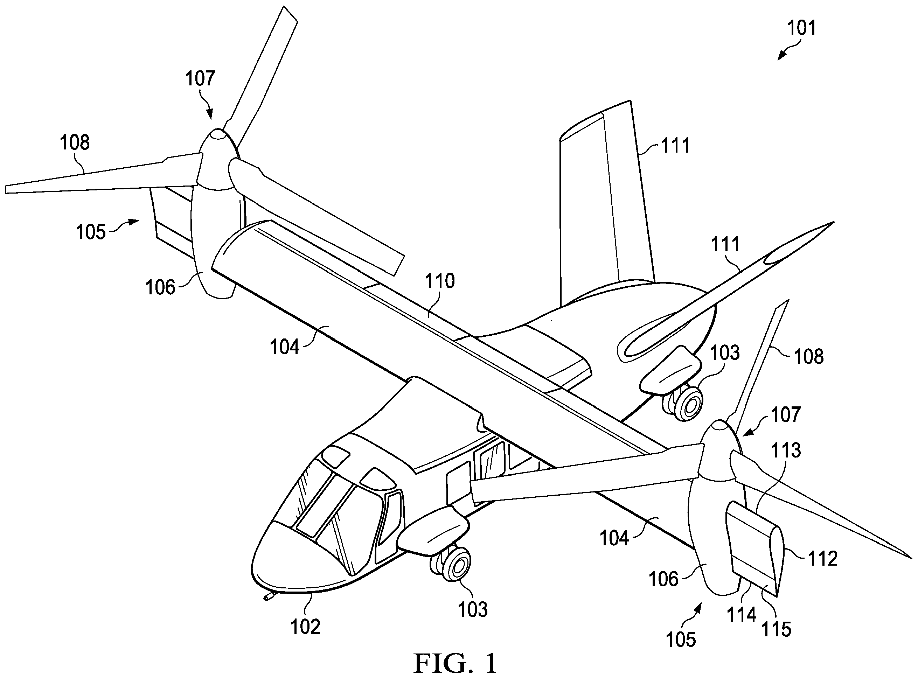

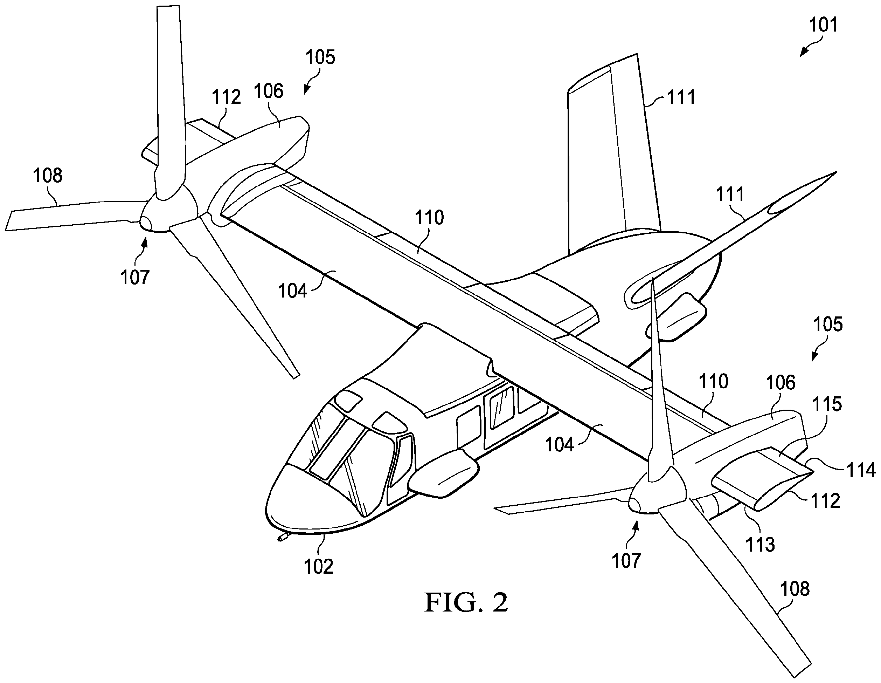

Referring to FIGS. 1 and 2, an example tiltrotor aircraft 101 capable of employing embodiments of the free pivot wing extension is shown in different flight modes. FIG. 1 illustrates tiltrotor aircraft 101 in a helicopter mode in which proprotors 107 are positioned substantially vertical to provide a lifting thrust. FIG. 2 illustrates tiltrotor aircraft 101 in an airplane mode in which proprotors 107 are positioned substantially horizontal to provide a thrust for forward movement. Tiltrotor aircraft 101 may include fuselage 102, landing gear 103, and wings 104. A propulsion system 105 is positioned on the ends of wings 104. Each propulsion system 105 includes an engine nacelle 106, which houses a turbine engine or other power plant, and a proprotor system 107 having a plurality of rotor blades 108. During operation, the engines typically maintain a constant rotational speed for their respective proprotors 108. The pitch of rotor blades 108 can be adjusted to selectively control thrust and lift of each propulsion system 105 on tiltrotor aircraft 101. The tiltrotor aircraft 101 includes controls, e.g., cyclic controllers and pedals, carried within a cockpit of fuselage 102, for causing movement of the aircraft 101 and for selectively controlling the pitch of each blade 108 to control the direction, thrust, and lift of tiltrotor aircraft 101. For example, during flight a pilot can manipulate a cyclic controller to change the pitch angle of rotor blades 108 and/or manipulate pedals to provide vertical, horizontal, and yaw flight movement.

The engine nacelle 106 for propulsion system 105 includes is mechanically coupled to an actuator system used for moving the proprotors 108 between airplane mode and helicopter mode. During the airplane mode, vertical lift is primarily supplied by the airfoil profile of wings 104, while rotor blades 108 provide forward thrust. During the helicopter mode, vertical lift is primarily supplied by the thrust of rotor blades 108. It should be appreciated that tilt rotor aircraft 101 may be operated such that propulsion systems 105 are selectively positioned at various angles between airplane mode and helicopter mode, which can be referred to as a conversion mode. Control surfaces 110 on wing 104 are used to adjust the attitude of tiltrotor aircraft 101 around the pitch, roll, and yaw axes while in airplane or conversion mode. Additional stabilizers or control surfaces 111 may be required when tiltrotor aircraft 101 is in airplane mode. Control surfaces 110 and 111 may be, for example, ailerons, flaps, slats, spoilers, elevators, rudders, or ruddervators.

Propulsion system 105 for a tiltrotor aircraft 101 typically features a power train, drive shaft, hub, swashplate, and pitch links within engine nacelle fairing 106. The drive shaft and hub are mechanical components for transmitting torque and/or rotation from the engine to the rotor blades 108. The power train may include a variety of components, including a transmission and differentials. In operation, the drive shaft receives torque or rotational energy from the engine and rotates the rotor system 107, which causes blades 108 to rotate about the drive shaft. A swashplate translates flight control input into motion of blades 108. Rotor blades 108 are usually spinning when tiltrotor aircraft 101 is in flight, and the swashplate transmits flight control input from the non-rotating fuselage 102 to the hub, blades 108, and/or components coupling the hub to blades 108 (e.g., grips and pitch horns).

FIGS. 1 and 2 illustrate a propulsion system 105 in which all the components, such as the engine, nacelle fairing 106, and proprotor system 107, all rotate relative to wing 104. In other embodiments, the engine nacelle fairing 106 may remain in a fixed position while proprotor system 107 and rotor blades 108 rotate between the helicopter, conversion, and airplane modes.
Tiltrotor aircraft 101 has a free-pivot wing extension 112 attached outboard of each engine nacelle 106. The free-pivot wing extensions 112 function as extensions of wings 104 during certain flight modes. Each free-pivot wing extension 112 has a leading edge 113, a trailing edge 114, and a trim tab 115. The free-pivot wing extensions 112 provide an aerodynamic lifting surface that is completely free to rotate about a spanwise axis, subject only to aerodynamic pitching moments. Generally, free-pivot wing extensions 112 are unrestricted by mechanical constraints; however, in some embodiments free-pivot wing extensions 112 may be limited in range by stops or dampers. To provide static angle of attack stability, the axis of rotation is located forward of the aerodynamic center of the free-pivot wing extension 112.

Wings with a high aspect ratio have aerodynamic advantages, such as less vortex-induced downwash and less induced drag. For a tiltrotor aircraft 101, lengthening wings 104 is not practical because of the propulsion systems 105 on the end of each wing 104. If wings 104 were extended, then they would essentially increase moment arm between the loads generated by the propulsion systems 105 and the wing root at fuselage 102. This would require additional support for wings 104 and would result in added weight. While free-pivot wing extensions 112 will add weight to wings 104, the added force at the wing root is less than what would be created by moving propulsion systems 105 outward. Free-pivot wing extensions 112 lengthen the wingspan, which increases the wing aspect ratio so that there is less induced drag and more efficient aerodynamics.

Free-pivot wing extension 112 is pivotably attached to engine nacelle 106 through a single axis. The angle of the chord of free-pivot wing extension 112 may vary relative to wing 104 as free-pivot wing extension 112 rotates about its mounting point. The angle of the chord of free-pivot wing extension 112 relative to wing 104 is dependent only upon the aerodynamic forces applied to the wing extension 112. The mounting axis or pivot point for free-pivot wing extension 112 is located forward of the aerodynamic center for wing extension 112 so that the rotation of the wing extension is dynamically stable, and under low or no aerodynamic loads the trailing edge 114 hangs down.

When tiltrotor aircraft 101 has little or no forward movement, such as during helicopter mode operation or when aircraft 101 is on the ground, free-pivot wing extension 112 would generally hang so that trailing edge 114 is down as illustrated in FIG. 1. Wind gusts or aerodynamic forces created by edgewise flight while in helicopter mode would cause free-pivot wing extension 112 to begin to rotate trailing edge 114 out of a purely vertical position. Downdraft from rotors 108 during helicopter mode operations would tend to create aerodynamic forces on free-pivot wing extension 112 that would keep it in a vertical position. However, as tiltrotor aircraft 101 transitions into forward flight in conversion mode and/or airplane mode, the aerodynamic forces on free-pivot wing extension 112 would force it into a more horizontal position as illustrated in FIG. 2.

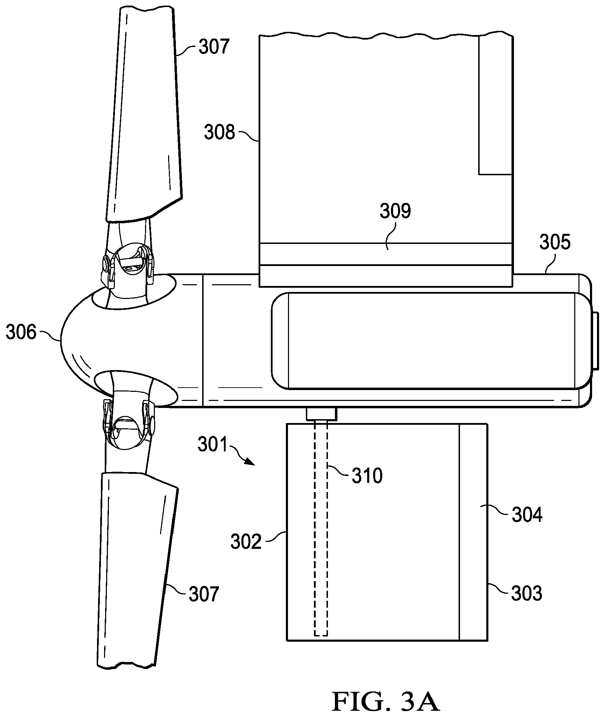

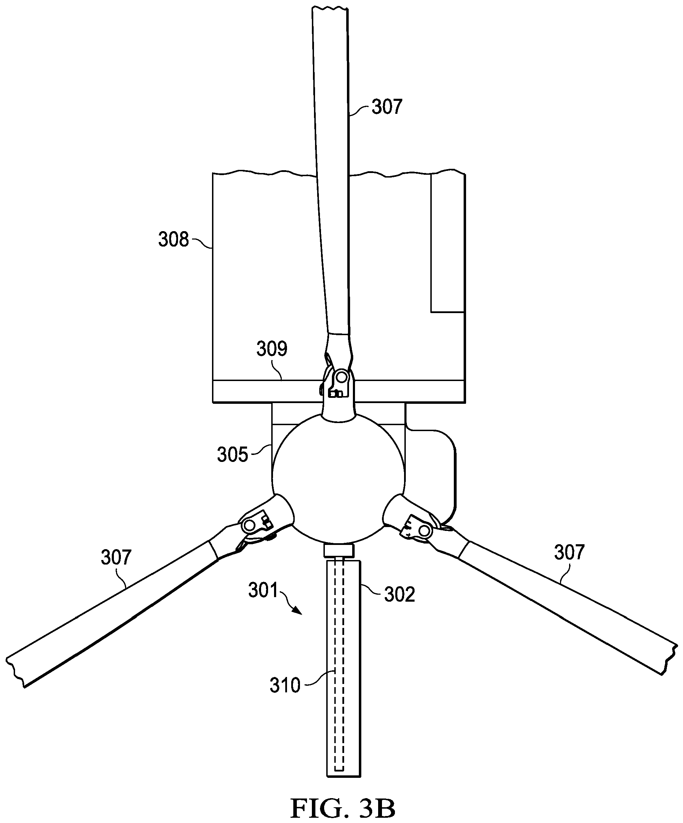

Referring to FIGS. 3A and B, a top view of a free-pivot wing extension 301 is illustrated. Free-pivot wing extension 301 has a leading edge 302, a trailing edge 303, a trim tab 304. Free-pivot wing extension 301 is attached to an engine nacelle 305, which may enclose a turbine engine or other power plant to drive proprotor system 306 with rotors 307. Engine nacelle 305 is attached to wing 308 by a wingtip gearbox 309 that allows engine nacelle 305 and proprotor system 306 to rotate between a helicopter mode and an airplane mode. Free-pivot wing extension 301 is mounted on a spindle 310 using bearings that allow the free-pivot wing extension 301 to pivot around spindle 310 in response to any applied force. Spindle 310 is mounted on engine nacelle 305. Free-pivot wing extension 301 may rotate around the axis of spindle 310 in response to applied aerodynamic forces.

In FIG. 3A, the free-pivot wing extension 301 is shown in a position that is roughly parallel to wing 308. Engine nacelle 305 is rotated to a generally forward-facing position. This position would be expected, for example, in forward flight while in airplane mode. In this configuration, aerodynamic forces created by forward flight would cause the free-pivot wing extension 301 to generate additional lift.

In FIG. 3B, the free-pivot wing extension 301 is shown in a position that is roughly perpendicular to wing 308. Engine nacelle 305 is rotated to a generally vertical position. This position would be expected, for example, in vertical or hovering flight while in helicopter mode. In this scenario, the aerodynamic forces on free-pivot wing extension 301 would be generated principally by downwash from rotors 307. When the aircraft transitions from a hover into edgewise flight and then as engine nacelle 305 is rotated out of the vertical position into conversion mode or aircraft mode, aerodynamic forces are generated on free-pivot wing extension 301, which causes free-pivot wing extension 301 to rotate out of the purely vertical position. As free-pivot wing extension 301 rotates, it will begin generating lift once it is below a stall angle of attack.

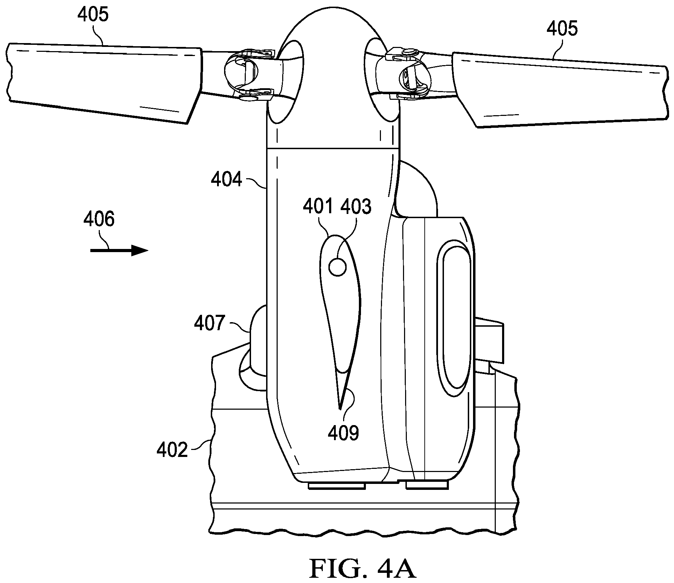

FIGS. 4A-C are side views of a free-pivot wing extension 401 that illustrate the movement of a free-pivot wing extension 401 as a tiltrotor aircraft 402 transitions from helicopter mode to airplane mode. Free-pivot wing extension 401 is mounted on a spindle 403 that is attached to engine nacelle 404. Free-pivot wing extension 401 rotates around spindle 403 in response to applied forces, such as aerodynamic forces and gravity. Accordingly, the position of engine nacelle 404 alone does not affect the position of free-pivot wing extension 401.

The engine nacelle 404 is shown in FIG. 4A in a vertical position, which allows the tiltrotor aircraft 402 to operate in a helicopter mode. When operating in helicopter mode, the downwash from rotor blades 405 provides a lifting trust for aircraft 402. Free-pivot wing extension 401 hangs in a generally vertical position in FIG. 4A since there is relatively little or no lateral airflow 406 in helicopter mode and, therefore, little lateral aerodynamic forces acting on free-pivot wing extension 401.

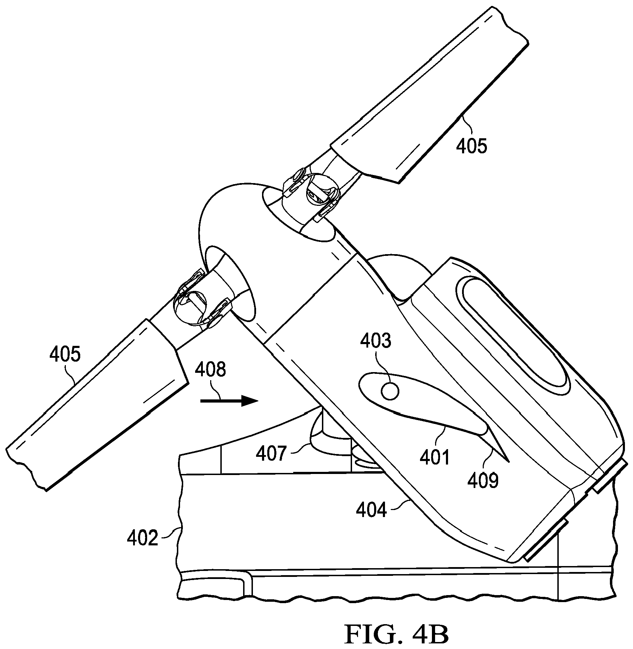

Engine nacelle 404 may rotate forward as the tiltrotor aircraft 402 transitions into airplane mode. FIG. 4B illustrates engine nacelle 404 rotated into a conversion mode which moves the tiltrotor aircraft 402 forward. When operating in the conversion mode, rotor blades 405 provide both lifting thrust and lateral thrust to create forward movement. In addition, wings 407 on tiltrotor aircraft 402 provide lift during the conversion mode. As shown in FIG. 4B, the forward movement creates lateral airflow 408 and lateral aerodynamic forces cause free-pivot wing extension 401 to rotate around spindle 403 into the airflow 408. Free-pivot wing extension 401 will provide additional lift for aircraft 402 once the free-pivot wing extension 401 is below a stall angle of attack. A trim tab or flap 409 can be used to control the attitude of free-pivot wing extension 401. The trim tab 409 may be fixed at a set position or may be moveable in-flight by a pilot or flight control system. The position of trim tab 409 may be controlled, for example, using an electrical, hydraulic, or mechanical actuator. In one embodiment, preset positions may be selected for trim tab 409 depending upon the position of engine nacelle 404. For example, the trim tab 409 may have a first position for helicopter mode, a second position for conversion mode, and a third position for airplane mode.

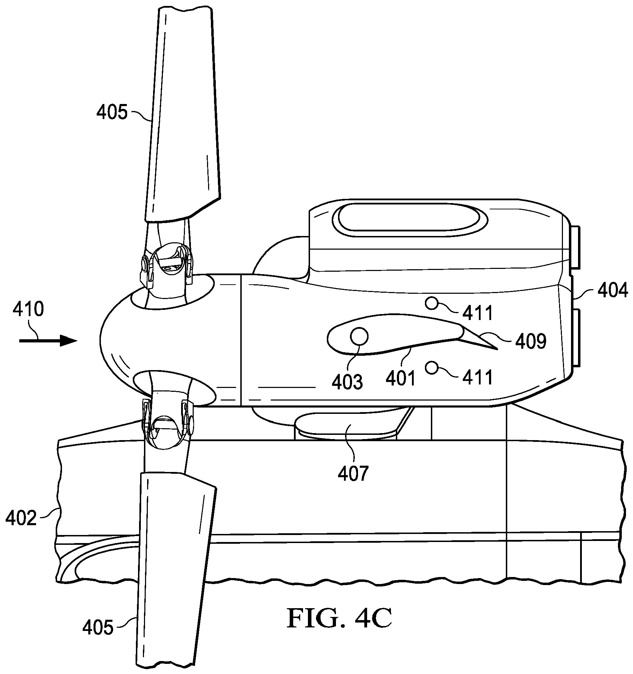

FIG. 4C illustrates engine nacelle 404 rotated forward into an airplane mode. Rotor blades 405 provide forward thrust during airplane mode, which creates increased airflow 410 and greater lateral aerodynamic forces are applied to free-pivot wing extension 401. Wings 407 and free-pivot wing extension 401 provide lift for aircraft 402 in airplane mode. Free-pivot wing extension 401 has rotated around spindle 403 to generally horizontal position. The position of trim tab 409 may be selected to optimize the lift provided by free-pivot wing extension 401 during airplane mode flight.

The addition of the free-pivot wing extension outboard of the engine creates a longer wing surface with a higher aspect ratio without having to move the engine further out to the end of the wing, which would increase the loading at the wing root. By using a free-pivot wing extension, the wing extension rotates out of the way when the tiltrotor aircraft is operating in helicopter mode and does not act as a barrier to the rotor downwash. In some embodiments, one or more stops 411 may be installed on the engine nacelle to limit the range over which the free-pivot wing extension can move. Additionally, the free-pivot wing extension can reduce the effect of wind gusts, turbulence, or vertical updrafts on the aircraft since the extension will rotate out the way before returning to desired position in the airflow. In some embodiments, a stop or damper may be added to limit the rotation speed of the free-pivot wing extension around its axis.

Although the example embodiments discussed herein describe the free-pivot wing extension as being attached to the engine nacelle, it will be understood that the wing extension can be attached to any structure on the outboard side of the propulsion system.

Embodiments of the present disclosure are not limited to any particular setting or application, and embodiments can be used with a rotor system in any setting or application such as with other aircraft, vehicles, or equipment. It will be understood that tiltrotor aircraft 101 is used merely for illustration purposes and that any aircraft, including fixed wing, rotorcraft, commercial, military, or civilian aircraft may use an engine-exhaust suppressor system as disclosed herein.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

## Claims

1. A tiltrotor aircraft, comprising:
a fuselage;
a first wing member having a first end and a second end, the first end attached to the fuselage;
an engine nacelle attached to the second end of the wing member; and
a freely pivoting wing extension attached to the engine nacelle.

2. An apparatus, comprising:
a propulsion system configured to move between a horizontal position and a vertical position during operation; and
a free-wing assembly attached on the propulsion system.

3. The tiltrotor aircraft of claim 1, further comprising:
a spindle attached to the engine nacelle, wherein the freely pivoting wing extension is attached to the engine nacelle by the spindle; or
the apparatus of claim 2, further comprising:
a spindle mounted on the propulsion system, wherein the free-wing assembly is attached to the propulsion system by the spindle.

4. The tiltrotor aircraft of claim 3, wherein the freely pivoting wing extension is configured to rotate around the spindle in response to aerodynamic forces; or
the apparatus of claim 3, wherein the free-wing assembly is configured to rotate around the spindle in response to aerodynamic forces independently of the position of the propulsion system.

5. The tiltrotor aircraft of claim 1 or of claim 3 or of claim 4, further comprising:
one or more dampers mounted on the engine nacelle and configured to limit rotation of the freely pivoting wing extension; or
the apparatus of claim 2 or of claim 3 or of claim 4, further comprising:
one or more stops configured to limit range of motion of the free-wing assembly.

6. The tiltrotor aircraft of claim 1 or of any of claims 3 to 5, wherein the first wing member is a fixed wing that does not rotate relative to the fuselage.

7. The tiltrotor aircraft of claim 1 or of any of claims 3 to 6, wherein the freely pivoting wing extension rotates around a spanwise axis of the first wing member.

8. The tiltrotor aircraft of claim 1 or of any of claims 3 to 7, wherein the freely pivoting wing extension operates independently of the first wing member and is attached to the engine nacelle on a side opposite to the first wing member.

9. The tiltrotor aircraft of claim 1 or of any of claims 3 to 8, further comprising:
a trim flap attached to a trailing edge of the freely pivoting wing extension, wherein the trim flap is set at a fixed position; or
the apparatus of claim 2 or of any preceding apparatus claim, further comprising:
a trim tab attached to a trailing edge of the free-wing assembly, wherein a position of the trip tab relative to the free-wing assembly is adjustable during operation.

10. The tiltrotor aircraft of claim 1 or of any of claims 3 to 9, further comprising:
a trim flap attached to a trailing edge of the freely pivoting wing extension, wherein a position of the trim flap relative to the freely pivoting wing extension is adjustable in-flight; or
the apparatus of claim 2 or of any preceding apparatus claim, further comprising:
a trim tab attached to a trailing edge of the free-wing assembly, wherein the trim tab is set at a fixed position.

11. The tiltrotor aircraft of claim 1 or of any of claims 3 to 10, further comprising:
a power train coupled to the engine nacelle and comprising a power source and a drive shaft in mechanical communication with the power source; and
a rotor system in mechanical communication with the drive shaft, at least part of the rotor system being tiltable between a helicopter mode position and an airplane mode position.

12. The tiltrotor aircraft of claim 1 or of any of claims 3 to 11, wherein the engine nacelle is configured to move between a horizontal position and a vertical position during operation, and wherein the freely pivoting wing extension operates independently of the position of the engine nacelle.

13. The tiltrotor aircraft of claim 1 or of any of claims 3 to 12, wherein the freely pivoting wing extension is configured to provide a lift force to the tiltrotor aircraft when the tiltrotor aircraft moves in a horizontal direction; or
the apparatus of claim 2 or of any preceding apparatus claim, wherein the propulsion system is attached to a fixed wing of a tiltrotor aircraft, and wherein the free-wing assembly is configured to provide a lift force to the tiltrotor aircraft when the tiltrotor aircraft moves in a horizontal direction.

14. The tiltrotor aircraft of claim 1 or of any of claims 3 to 13, further comprising:
a second wing member having a first end attached to a side of the fuselage opposite from the first wing member;
a second engine nacelle attached to second end of the second wing member; and
a second freely pivoting wing extension attached to the second engine nacelle.
